# EUROPÄISCHE PATENTSCHRIFT

(11) **EP 0 653 095 B1**
(45) Veröffentlichungstag und Bekanntmachung des Hinweises auf die Patenterteilung: **25.09.1996**
(21) Anmeldenummer: 93914609.8
(22) Anmeldetag: 07.07.1993
(51) Int. Cl.: G21C 17/017, G21C 17/007

(54) **EINRICHTUNG ZUR PRÜFUNG VON STUTZENSCHWEISSNÄHTEN**
DEVICE FOR INSPECTING TUBE WELD SEAMS
DISPOSITIF D'INSPECTION DES CORDONS DE SOUDURE DE RACCORD DE TUBULURE

(30) Priorität: 30.07.1992 DE 9209944 U
(43) Veröffentlichungstag der Anmeldung: 17.05.1995
(73) Patentinhaber: SIEMENS AKTIENGESELLSCHAFT, 80333 München (DE)
(72) Erfinder: GUGEL, Georg, D-90562 Kalchreuth (DE)
(86) Internationale Anmeldenummer: DE9300604
(87) Internationale Veröffentlichungsnummer: WO9403904

(56) Entgegenhaltungen:
- EP-A- 0 081 214
- EP-A- 0 134 534
- WO-A-91/19295
- DD-A- 292 758
- DE-A- 2 830 018
- DE-A- 3 147 296
- GB-A- 2 012 959
- DATABASE WPI Week 8628, Derwent Publications Ltd., London, GB; AN 86-181895 & SU,A,1 196 763

## Beschreibung

Die Erfindung bezieht sich auf eine Einrichtung zur zerstörungsfreien Prüfung von Stutzenschweißnähten, insbesondere der Schweißnähte der in einem Druckhalter eines Kernreaktors zur Durchführung von Heizstäben eingeschweißten Stutzen.

In einem Kernreaktor hat der Druckhalter die Aufgabe, den Betriebsdruck im Reaktorkühlsystem konstant zu halten. Er ist ein zum Teil mit Wasser gefüllter stehender Behälter, in den über an Stutzen angeflanschte Durchführungen Heizstäbe hineinragen, die bei Druckabfall zusätzlich Wasser verdampfen, um dem Druckabfall entgegenzuwirken. Die Stutzen sind dabei mit ihrer Mittenachse seitlich versetzt und parallel zur Längsachse des Druckhalters in seiner unteren Kalotte eingeschweißt, so daß die von der Schweißnaht aufgespannte Ebene unter einem schiefen Winkel zur Mittenachse des Stutzens verläuft.

Der Erfindung liegt nun die Aufgabe zugrunde, eine einfach zu bedienende und leicht zu justierende Einrichtung zur Prüfung von Stutzenschweißnähten, insbesondere der Schweißnähte der zur Durchführung von Heizstäben verwendeten Stutzen eines Druckhalters, anzugeben.

Die genannte Aufgabe wird gemäß der Erfindung gelöst mit den Merkmalen des Patentanspruches 1. Gemäß der Erfindung enthält eine Einrichtung zur Prüfung der Schweißnaht eines in einem Behälter eingeschweißten Stutzens
a) einen den Stutzen ringförmig umgebenden Führungsring für einen in dessen Umfangsrichtung verfahrbaren Wagen,
b) einen am Wagen angeordneten Prüfsystemträger für ein an die Außenwand des Behälters ankoppelbares Prüfsystem, wobei
c) der Führungsring schwenkbar auf einer am Stutzen abstützbaren Halterung angeordnet ist.

Da der Führungsring auf der sich am Stutzen abstützenden Halterung schwenkbar angeordnet ist, kann die von ihm aufgespannte Ebene einfach auf die von der Schweißnaht aufgespannte Ebene eingerichtet werden.

Vorzugsweise sind eine an einem Flanschvorsprung des Stutzens abstützbare Halterung sowie eine an dem Führungsring angeordnete, an die Außenwand des Behälters anlegbare Abstützung vorgesehen. Dadurch kann die gesamte Einrichtung zwischen der Kalotte des Druckhalters und dem Flanschvorsprung durch eine einzige axiale Stellbewegung, beispielsweise eine axiale Stellbewegung eines Stützfußes der Halterung, verspannt und somit fixiert werden.

In einer weiteren bevorzugten Ausgestaltung der Erfindung ist auf dem Wagen schräg zu der vom Führungsring aufgespannten Ebene eine Schiene angeordnet, auf der der Prüfsystemträger quer zur Umfangsrichtung des Führungsrinoes verschoben werden kann. Durch diese Maßnahme ist sichergestellt, daß die gesamte Schweißnaht lückenlos geprüft werden kann.

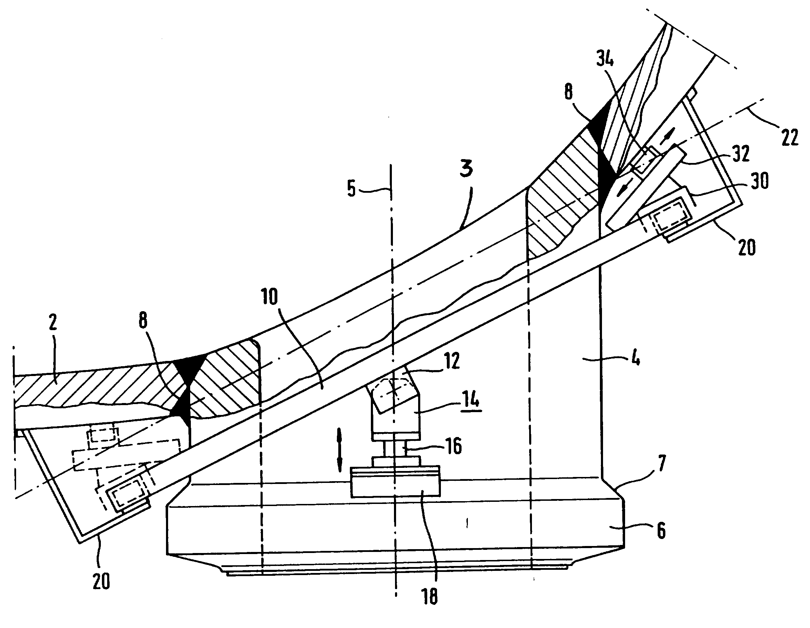

Die Erfindung wird anhand des Ausführungsbeispiels der Zeichnung näher erläutert, in deren einziger Figur eine Vorrichtung gemäß der Erfindung in Arbeitsposition am Stutzen eines Druckhalters schematisch dargestellt ist.

Entsprechend der Figur ist in einen kalottenförmigen Bereich eines Druckhalters 2 ein Stutzen 4 entlang einer Schweißnaht 8 eingeschweißt, dessen Mittenachse 5 den durch die Kugelkalotte des Druckhalters 2 gebildeten, gestrichelt dargestellten Kreisbogen 3 unter einem schiefen Winkel schneidet. An seinem freien Ende bildet der Stutzen einen Flansch 6, auf dem im Normalbetrieb eine in der Figur nicht näher dargestellte Flanschplatte aufgeschraubt ist, in die in das Innere des Druckhalters 2 ragende und ebenfalls in der Figur nicht dargestellte Heizstäbe eingeschweißt sind. Der Außendurchmesser des Flansches 6 ist gegenüber dem Außendurchmesser des Stutzens 4 erweitert, so daß sich ein im Beispiel der Figur angeschrägter Flanschvorsprung 7 ergibt.

Über den Stutzen 4 ist ein Führungsring 10 geschoben. Der Führungsring 10 ist mit zwei Befestigungsplatten 12 versehen, die jeweils schwenkbar eine Halterung 14 aufnehmen, die einen durch einen Kolben 16 hydraulisch oder pneumatisch verschiebbaren Stützfuß 18 enthält, der sich am Flanschvorsprung 7 abstützt. Zur Gegenlagerung sind am Führungsring 10 wenigstens drei L-förmige Abstützungen 20 befestigt, deren einer Schenkel jeweils mit dem Führungsring 10 verbunden ist und deren anderer freier Schenkel durch Ausfahren des Kolbens 16 der Halterung 14 gegen die Außenwand des Druckhalters 2 gedrückt wird.

Da der Führungsring 10 schwenkbar mit der Halterung 14 verbunden ist, wird durch das Ausfahren des Kolbens 16 der Führungsring 10 parallel zu einer durch die Auflagepunkte der Abstützung auf der Kalotte des Druckhalters 2 gebildeten Ebene positioniert. Bei zentrischem Anordnen des Führungsringes 10 um den Stutzen 4 wird dann durch Ausfahren des Kolbens 16 automatisch eine Positionierung des Führungsringes 10 parallel zu einer durch die Schweißnaht 8 gebildeten Ebene 22 ausgerichtet.

Auf dem Führungsring 10 ist ein Wagen 30 angeordnet, der in Umfangsrichtung des Führungsrings 10 verfahren werden kann. Der Wagen 30 trägt eine Schiene 32, deren Längsachse schräg zur Ebene des Führungsringes 10 und quer zu dessen Umfangsrichtung verläuft. Auf der Schiene 32 ist ein in Richtung der Pfeile längs verschiebbarer Prüfsystemträger 34 angeordnet, in dem das zur Prüfung der Schweißnaht erforderliche Prüfsystem, beispielsweise ein oder mehrere Ultraschallprüfköpfe, nach außen federnd gelagert ist und gegen die Außenwand des Druckhalters 2 gedrückt wird. In der Figur ist außerdem der Wagen 30 in einer zweiten, um 180° verschobenen Arbeitsposition gestrichelt eingezeichnet.

## Patentansprüche

1. Einrichtung zur Prüfung der Schweißnaht (8) eines in einem Behälter (2) eingeschweißten Stutzens (4) mit
a) einem den Stutzen (4) ringförmig umgebenden Führungsring (10) für einen in dessen Umfangsrichtung verfahrbaren Wagen (30),
b) einem am Wagen (30) angeordneten Prüfsystemträger (34) für ein an die Außenwand des Behälters (2) ankoppelbares Prüfsystem, wobei
c) der Führungsring (10) schwenkbar auf einer am Stutzen (4) abstützbaren Halterung (14) angeordnet ist.

2. Einrichtung nach Anspruch 1, **dadurch gekennzeichnet,** daß die an einem Flanschvorsprung (7) des Stutzens (4) abstützbare Halterung (14) sowie eine an dem Führungsring (10) angeordnete, an die Außenwand des Behälters (2) anlegbare Abstützung (20) vorgesehen sind.

3. Einrichtung nach Anspruch 2, **dadurch gekennzeichnet,** daß auf dem Wagen (30) schräg zu der vom Führungsring (10) aufgespannten Ebene eine Schiene (32) angeordnet ist, auf der der Prüfsystemträger (34) quer zur Umfangsrichtung des Führungsringes (10) verschoben werden kann.

## Claims

1. Device for inspecting the weld seam (8) of a connection piece (4) which is welded in a container (2), having
a) a guide ring (10), which annularly surrounds the connection piece (4), for a carriage (30) which can be moved in the circumferential direction of the guide ring (10),
b) an inspection-system carrier (34), which is arranged on the carriage (30), for an inspection system which can be coupled to the outer wall of the container (2), wherein
c) the guide ring (10) is arranged such that it can be swung on a holding support (14) which can be supported on the connection piece (4).

2. Device according to claim 1, characterised in that the holding support (14), which can be supported on a flange projection (7) of the connection piece (4), and also a support (20), which is arranged on the guide ring (10) and can be laid against the outer wall of the container (2), are provided.

3. Device according to claim 2, characterised in that a rail (32), on which the inspection-system carrier (34) can be displaced at an angle to the circumferential direction of the guide ring (10), is arranged on the carriage (30) obliquely relative to the plane which is clamped by the guide ring (10).

## Revendications

1. Dispositif de contrôle du cordon de soudure (8) d'une tubulure (4) soudée dans une enceinte (2), comportant :
a) une bague (10) qui entoure annulairement la tubulure (4) et qui est destinée à guider un chariot (30) pouvant être déplacé dans la direction de la circonférence de la bague,
b) un support (34) de système de contrôle, monté sur le chariot (30), pour un système de contrôle pouvant être couplé à la paroi extérieure de l'enceinte (2),
c) la bague (10) de guidage étant montée basculante sur une fixation (14) pouvant prendre appui sur la tubulure (4).

2. Dispositif suivant la revendication 1, caractérisé en ce qu'il est prévu que la fixation (14) puisse prendre appui sur une saillie (7) de bride de la tubulure (4) ainsi qu'un appui (20) monté sur la bague (10) de guidage et pouvant être appliqué à la paroi extérieure de l'enceinte (2).

3. Dispositif suivant la revendication 2, caractérisé en ce qu'un rail (32), sur lequel le support (34) de système de contrôle peut coulisser transversalement à la direction de la circonférence de la bague (10) de guidage, est monté sur le chariot (30) en oblique par rapport au plan comprenant la bague (10) de guidage.
